# EUROPEAN PATENT SPECIFICATION

(11) **EP 1 184 066 B1**
(45) Date of publication and mention of the grant of the patent: **26.05.2004**
(21) Application number: 01912307.4
(22) Date of filing: 13.03.2001
(51) Int. Cl.: B01D 39/20, F01N 3/02

(54) **EXHAUST GAS PURIFYING FILTER**
FILTER ZUR REINIGUNG VON ABGAS
FILTRE DE PURIFICATION DE GAZ D'ECHAPPEMENT

(30) Priority: 24.03.2000 JP 2000084359
(43) Date of publication of application: 06.03.2002
(73) Proprietor: NGK INSULATORS, LTD., Nagoya-City, Aichi Prefecture 467-8530 (JP)
(72) Inventor: HARADA, Takashi, NGK INSULATORS, LTD., Nagoya-shi, Aichi 467-8530 (JP); MIYAIRI, Yukio, NGK INSULATORS, LTD., Nagoya-shi, Aichi 467-8530 (JP); KUMAZAWA, Kazuhiko, NGK CERAMICS EUROPE, S.A., B-7331 Baudour (BE)
(74) Representative: Paget, Hugh Charles Edward
(86) International application number: PCT/JP2001/001955
(87) International publication number: WO 2001/070373

(56) References cited:
- EP-A- 0 278 750
- EP-A- 0 894 777
- EP-A1- 0 834 343
- WO-A-99/43629
- JP-A- 1 224 282
- JP-A- 5 023 512
- JP-A- 9 029 024
- US-A- 4 329 162
- US-A- 5 069 697
- US-A- 5 223 318
- US-A- 5 545 243
- US-A- 5 549 725

## Description

### Technical Field

The present invention relates to a filter for exhaust gas purification used for removal of solid particulates in exhaust gas, typified by a diesel particulate filter.

### Background Art

In order to remove, from, for example, the combustion gas emitted from a diesel engine, solid particulates composed mainly of carbon, there has been used a filter for exhaust gas purification produced from a honeycomb structure made of a porous ceramic material and having a large number of channels, by plugging given channels at one end of the honeycomb structure and the remaining channels at the other end of the honeycomb structure so as to be able to use the partition walls of the honeycomb structure surrounding the channels, as a filter layer for exhaust gas.

In such a filter for exhaust gas purification, the relation between the thicknesses of the partition walls of the honeycomb structure (the partition walls function as a filtration layer for exhaust gas layer) and the pore diameters of the partition walls has a large influence on the filter's trapping efficiency for solid particulates. In conventional ordinary filters for exhaust gas filtration, the pore diameters of the partition walls have been about 10 to 20 µm on an average from the property of the solid particulates to be captured, and the partition wall thicknesses have been about 300 to 1,000 µm in view of the pressure loss, strength, etc. of the filter.

Document EP 0 894 777 A describes a cordierite honeycomb structure, which may be used as a diesel particulate filter, according to the preamble of claim 1.

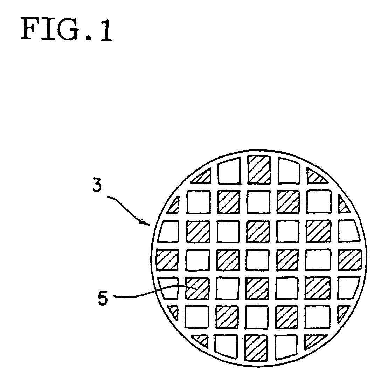

As a further example of conventional ceramic honeycomb filters, there is disclosed, in JP-A-56-129020, a ceramic honeycomb filter wherein the given channels of the honeycomb structure are plugged as shown in Fig. 1, at one end of the honeycomb structure and the remaining channels are plugged at the other end and wherein the thicknesses of the partition walls surrounding the channels are 0.1 to 3 mm, the average pore diameter is 10 µm and the porosity is 30 to 60%. In the literature, however, no mention is made on the relation between the partition wall thicknesses and the pore diameters. Also in JP-A-63-185425 is disclosed a ceramic honeycomb filter having partition wall thicknesses of 0.25 to 0.76 mm; however, in this literature, either, no mention is made on the relation between the partition wall thicknesses and the pore diameters.

Also, in JP-A-5-124021 is disclosed a method for conducting extrusion molding with no deformation or strain by extruding a silicon carbide-based honeycomb into a cooling medium bath. In the literature, the partition wall thickness is set at 0.2 mm; however, no mention is made on the relation between the partition wall thicknesses and the pore diameters. Further, in JP-A-9-202671 is disclosed a method for producing a silicon carbide-based honeycomb filter having partition wall thicknesses of 0.05 to 1.0 mm and an average pore diameter of 1 to 49 µm. In the Examples, there is a description of partition wall thickness = 0.45 mm and average pore diameter = 7 µm; however, in this literature, either, no mention is made on the relation between the partition wall thicknesses and the pore diameters.

Furthermore, in SAE 950735 is described a cordierite-based honeycomb filter having an average pore diameter of 7 µm; however, the filter has a partition wall thickness of 430 µm and, as a result, give too high a high pressure loss.

In recent years, there has been a technical progress in diesel engine and, in particular, fuel injection has come to be made at a higher pressure; as a result, the solid particles discharged form diesel engine have become finer and the capturing of such fine solid particles has become a big problem. With conventional filters such as mentioned above, however, there is a fear that, of the solid particles discharged from diesel engine, fine solid particles of 0.08 µm or less blow off the filters.

In view of the above situation, the present invention aims at providing a filter for exhaust gas purification which is superior in trapping efficiency for fine solid particulates of 0.08 µm or less and which gives rise to no increase in pressure loss.

### Disclosure of Invention

According to the present invention, there is provided a A filter for exhaust gas purification comprising a honeycomb structure made of a porous ceramic material and having a large number of channels, both given channels at one end of the honeycomb structure and the remaining channels at the other end of the honeycomb structure being plugged so as to be able to use the partition walls of the honeycomb structure surrounding the channels, as a filter layer for exhaust gas, wherein the thickness of the partition walls is 250 µm or less, the porosity is 40% or more, the average pore diameter is 3 to 7 µm, and the volume of the pores having diameters of 10 µm or more is 20% or less relative to the volume of the total pores.

### Brief Description of the Drawing

Fig. 1 is a drawing for explaining a state of channel plugging at each end of a honeycomb filter.

### Best Mode for Carrying Out the Invention

The filter for exhaust gas purification according to the present invention is produced from a honeycomb structure made of a porous ceramic material and having a large number of channels, by plugging given channels at one end of the honeycomb structure and the remaining channels at the other end of the honeycomb structure so as to be able to use the partition walls of the honeycomb structure surrounding the channel, as a filter layer for exhaust gas. The plugging of channels is preferably conducted by plugging given channels as shown in Fig. 1, at one end of the honeycomb structure and the remaining channels at the other end of the honeycomb structure.

When an exhaust gas containing solid particulates is passed through one end of such a filter, the exhaust gas flows into the filter through those channels which are not plugged at the one end, passes through the porous partition walls, and enters the channels which are not plugged at the other end. The solid particulates in the exhaust gas are captured by the partition walls when passing through the partition walls, and a solid particulates-removed exhaust gas, i.e. a purified exhaust gas is discharged from the other end of the filter.

The filter of the present invention is characterized by having a porosity of 40% or more, an average pore diameter of 3 to 7 µm and a volume of pores having diameters of 10 µm or more, of 20% or less relative to the total pore volume. By constituting the present filter as above, the present filter can efficiently capture fine solid particulates of 0.08 µm or less. An average pore diameter of 3 to 6 µm, or a volume of pores having diameters of 10 µm or more, of 10% or less relative to the total pore volume is preferred because it can more efficiently capture solid particles of 0.08 µm or less.

Further in the present filter, the thicknesses of the partition walls functioning as a filtration layer are set at 250 µm or less. Thereby, the present filter can suppress an increase in pressure loss while having excellent trapping efficiency for fine solid particulates of 0.08 µm or less. Wall thicknesses of 150 µm or less are preferred because such thicknesses can show an even lower pressure loss.

In the filter of the present invention, the honeycomb structure is preferably made of a material selected form the group consisting of cordierite, zirconium phosphate, aluminum titanate, LAS and silicon carbide. Cordierite, zirconium phosphate, aluminum titanate and LAS have low thermal expansion coefficients; therefore, use of one material selected from them, as a material for the honeycomb structure can gives a filter superior in thermal shock resistance. When zirconium phosphate, aluminum titanate or silicon carbide is used as a material for the honeycomb structure, a filter superior in heat resistance can be obtained because the material has a high melting point. The plugging agent used for plugging of the channels of the partition walls is preferably made of the same material as for the honeycomb structure because the plugging agent and the material for the honeycomb structure can have the same thermal expansion coefficient.

The present invention is described in more detail below by way of Examples. However, the present invention is not restricted to these Examples.

### Examples 1 to 11 and Comparative Examples 1 to 4

Raw materials for cordierite, i.e. talc, kaolin, alumina, aluminum hydroxide, silica and graphite (their average particle diameters are shown in Table 1) were compounded in proportions shown in Table 1 (the proportion of graphite is relative to the total of the other materials). Thereto were added a binder, a surfactant and water, followed by mixing, to prepare various extrusion-moldable materials. Each material was subjected to extrusion molding to form various honeycomb structures 3 each having a diameter of 144 mm, a length of 152 mm and a partition wall thickness shown in Table 1 and a cell number shown in Table 1. One end of each honeycomb structure was plugged with a plugging material 5 made of the same material as for the honeycomb structure, as shown in Fig. 1 and the other end was plugged so that each channel of the honeycomb structure was plugged at either end. Then, each plugged honeycomb structure was fired at 1,420°C to obtain various filters. Each filter was measured for porosity, average pore diameter, volume of pores having diameters of 10 µm or more relative to total pore volume, initial pressure loss, and trapping efficiency for fine particulates of 0.08 µm or less. The results of the measurements are shown in Table 1.

Incidentally, porosity, average pore diameter, and volume of pores having diameters of 10 µm or more relative to total pore volume were measured by mercury porosimetry. Initial pressure loss was determined by measuring a difference in pressures before and after filter when the flow amount was 9 m³/min. Trapping efficiency for fine particulates of 0.08 µm or less was determined by measuring, according to a low-pressure impactor method, a difference in particle concentrations before and after filter, for each particle diameter group.

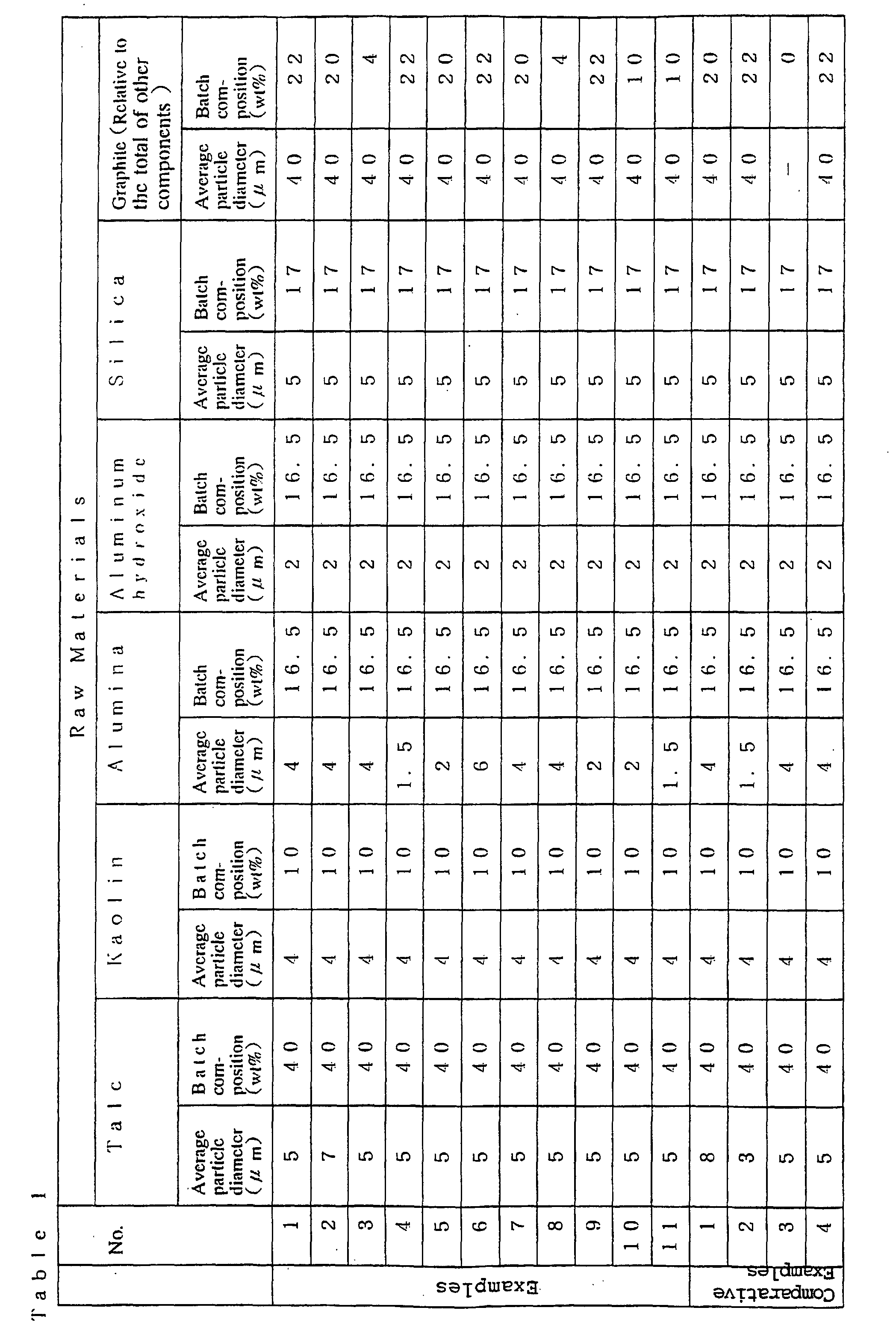

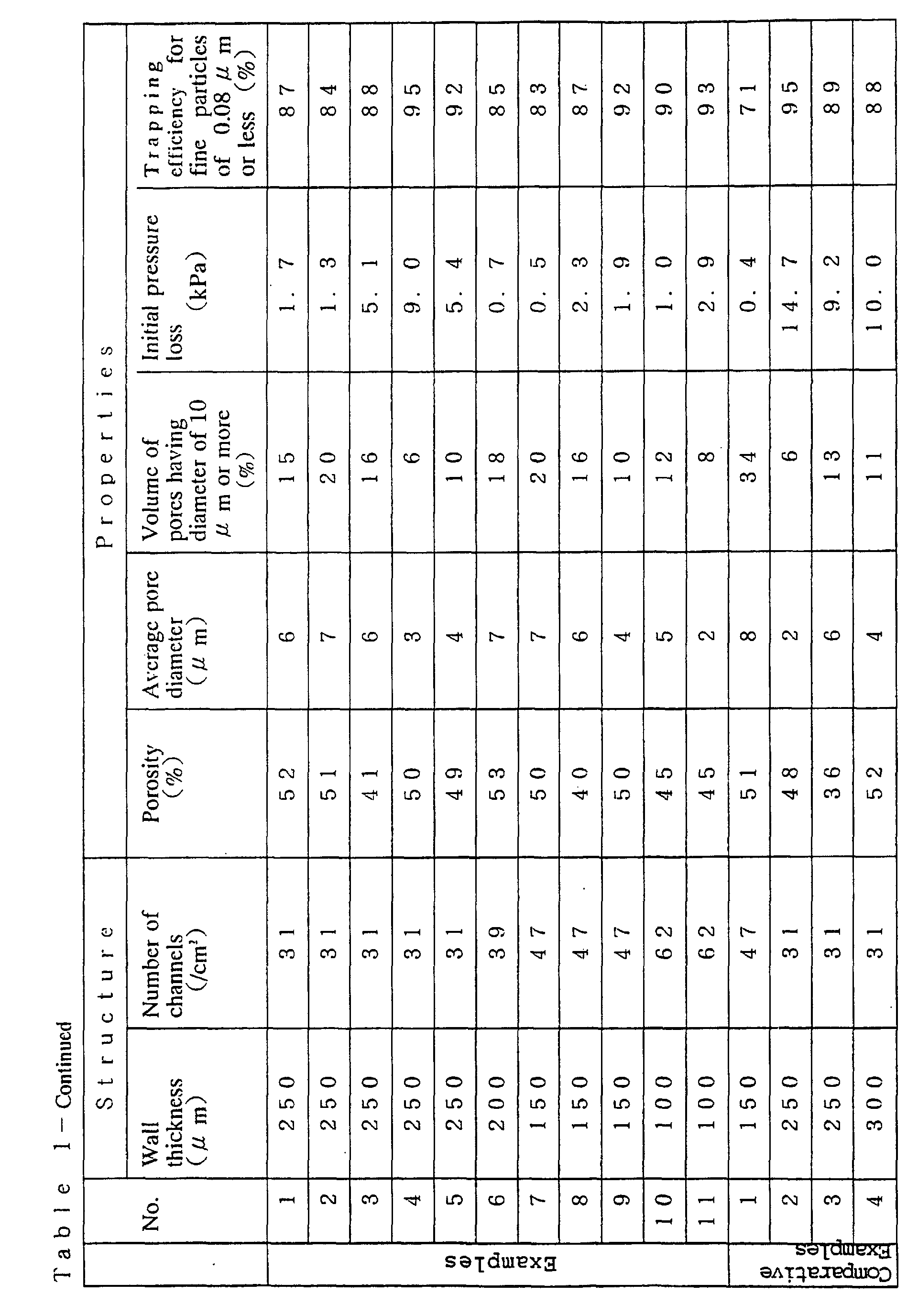

### Examples 12 to 18 and Comparative Examples 5 to 7

Two kinds (coarse and fine) of a type SiC materials each having an average particle diameter shown in Table 2 were compounded in proportions shown in Table 2. Thereto were added a binder, a surfactant and water, followed by mixing, to prepare various extrusion-moldable materials. Each material was subjected to extrusion molding to form various honeycomb structures 3 each having a diameter of 144 mm, a length of 152 mm and a partition wall thickness shown in Table 2 and a cell number shown in Table 2. One end of each honeycomb structure was plugged with a plugging material 5 made of the same material as for the honeycomb structure, as shown in Fig. 1 and the other end was plugged so that each channel of the honeycomb structure was plugged at either end. Then, each plugged honeycomb structure was debinded at 400°C in air atmosphere and then fired at a temperature shown in Table 2 in an Argon atmosphere, to obtain various filters. Each filter was measured for porosity, average pore diameter, volume of pores having diameters of 10 µm or more relative to total pore volume, initial pressure loss, and trapping efficiency for fine particulates of 0.08 µm or less, according to the same methods as in Examples 1 to 11 and Comparative Examples 1 to 4. The results of the measurements are shown in Table 2.

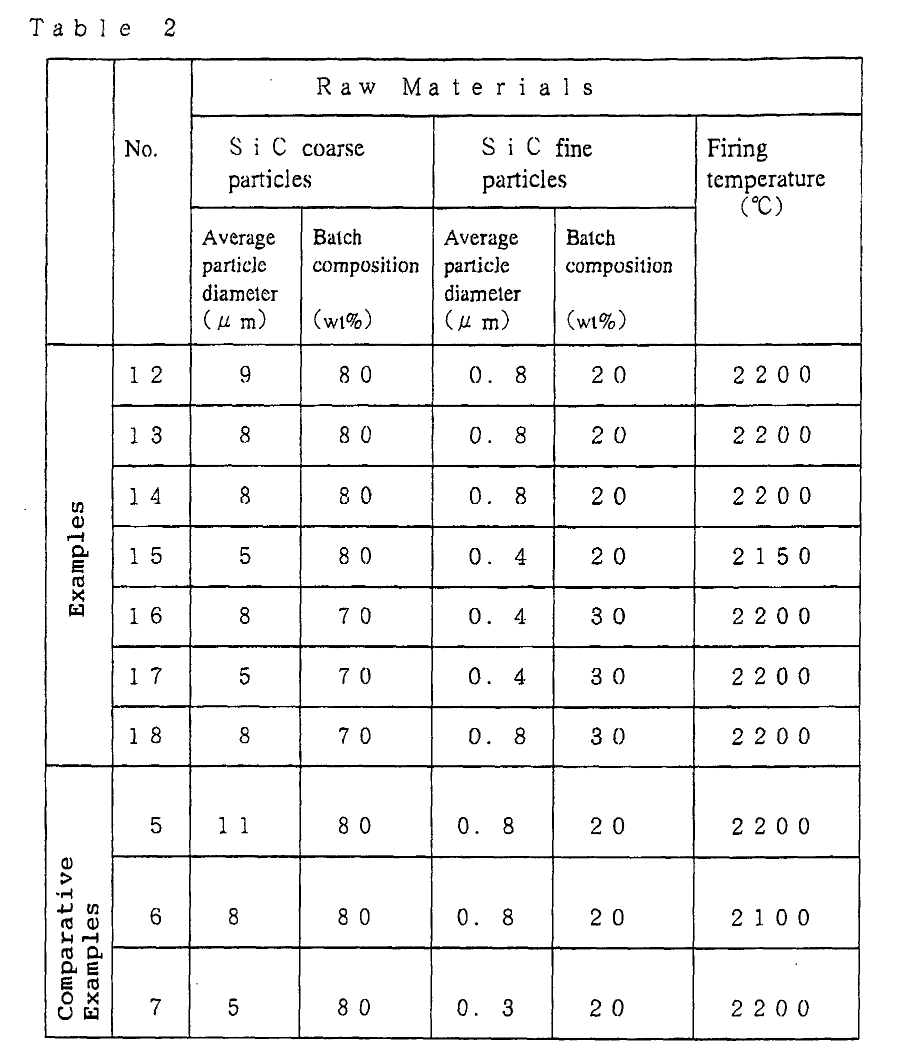

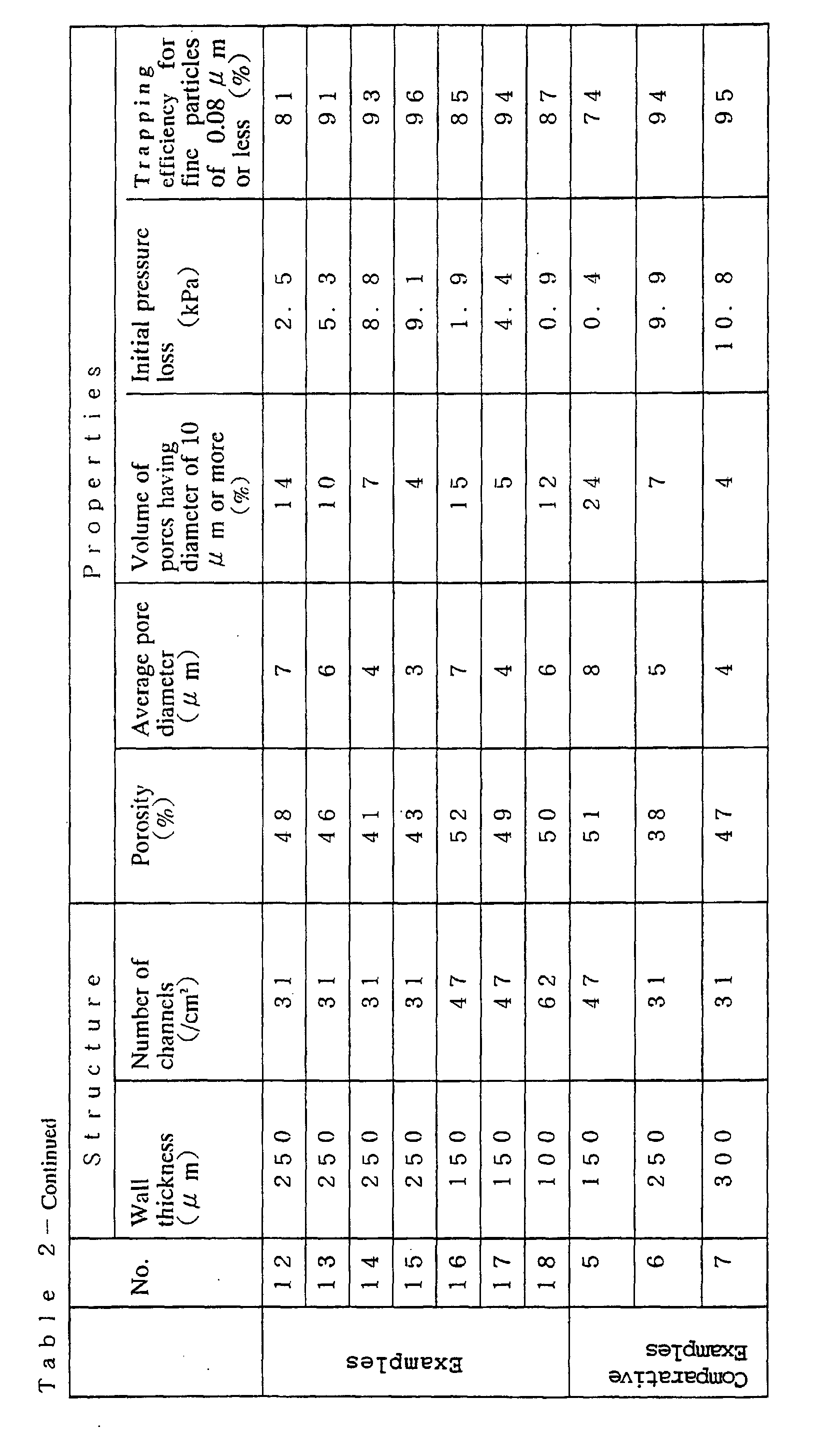

### Industrial Applicability

As described above, the filter of the present invention has improved trapping efficiency for fine particulates of 0.08 µm or less while suppressing an increase in pressure loss; therefore, can be suitably used as a filter for exhaust gas purification, for example, as a diesel particulate filter.

## Claims

1. A filter for exhaust gas purification comprising a honeycomb structure made of a porous ceramic material, the average pore diameter being 3 to 7 µm and the volume of the pores having diameters of 10 µm or more being 20% or less relative to the volume of the total pores, the honeycomb structure having a large number of channels,
**characterized in that** the thickness of the partition walls is 150 µm or less, the porosity is 40% or more and **in that** some channels are plugged at one end of the honeycomb structure and the remaining channels are plugged at the other end of the honeycomb structure so as to enable use of the partition walls of the honeycomb structure surrounding the channels as a filter layer for exhaust gas.

2. A filter for exhaust gas purification according to claim 1, wherein the average pore diameter is 3 to 6 µm.

3. A filter for exhaust gas purification according to claim 1 or claim 2, wherein the volume of the pores having diameters of 10 µm or more is 10% or less relative to the volume of the total pores.

4. A filter for exhaust gas purification according to any of claims 1 to 3, wherein the honeycomb structure is made of a material selected from the group consisting of cordierite, zirconium phosphate, aluminum titanate, LAS and silicon carbide.

## Patentansprüche

1. Filter zur Abgasreinigung, der eine Wabenstruktur aus einem porösen Keramikmaterial umfasst, wobei der mittlere Porendurchmesser 3 bis 7 µm beträgt und das Volumen der Poren mit Durchmessern von 10 µm oder mehr 20 % oder weniger bezogen auf das Volumen der gesamten Poren ausmacht, wobei die Wabenstruktur eine große Anzahl von Kanälen aufweist,
**dadurch gekennzeichnet, dass** die Dicke der Trennwände 150 µm oder weniger beträgt, die Porosität 40 % oder mehr beträgt und dass einige Kanäle an einem Ende der Wabenstruktur verschlossen sind und die übrigen Kanäle am anderen Ende der Wabenstruktur verschlossen sind, um die Verwendung der Trennwände der Wabenstruktur, die die Kanäle umgeben, als eine Filterschicht für Abgas zu ermöglichen.

2. Filter zur Abgasreinigung nach Anspruch 1, worin der mittlere Porendurchmesser 3 bis 6 µm beträgt.

3. Filter zur Abgasreinigung nach Anspruch 1 oder 2, worin das Volumen von Poren mit Durchmessern von 10 µm oder mehr 10 % oder weniger bezogen auf das Volumen der gesamten Poren ausmacht.

4. Filter zur Abgasreinigung nach einem der Ansprüche 1 bis 3, worin die Wabenstruktur aus einem Material besteht, das aus der aus Cordierit, Zirkoniumphosphat, Aluminiumtitanat, LAS und Siliziumcarbid bestehenden Gruppe ausgewählt ist.

## Revendications

1. Filtre pour la purification de gaz d'échappement comprenant une structure en nid d'abeilles réalisée en une céramique poreuse, le diamètre moyen des pores étant de 3 à 7 µm et le volume des pores ayant des diamètres de 10 µm ou plus représentant 20 % ou moins du volume total des pores, la structure en nid d'abeilles comportant un grand nombre de canaux,
**caractérisé en ce que** l'épaisseur des parois de séparation est de 150 µm ou moins, la porosité est de 40 % ou plus, et **en ce que** certains canaux sont bouchés à une extrémité de la structure en nid d'abeilles et les canaux restants sont bouchés à l'autre extrémité de la structure en nid d'abeilles de manière à permettre l'utilisation des parois de séparation de la structure en nid d'abeilles entourant les canaux en tant que couche de filtrage pour des gaz d'échappement.

2. Filtre pour la purification de gaz d'échappement selon la revendication 1, dans lequel le diamètre moyen des pores est de 3 à 6 µm.

3. Filtre pour la purification de gaz d'échappement selon la revendication 1 ou la revendication 2, dans lequel le volume des pores ayant des diamètres de 10 µm ou plus correspond à 10 % ou moins du volume total des pores.

4. Filtre pour la purification de gaz d'échappement selon l'une quelconque des revendications 1 à 3, dans lequel la structure en nid d'abeilles est réalisée en un matériau sélectionné dans le groupe comprenant la cordiérite, le phosphate de zirconium, le titanate d'aluminium, le LAS et le carbure de silicium.
